(19) Europäisches Patentamt
European Patent Office
Office européen des brevets

(11) **EP 2 952 547 B1**

(12) **FASCICULE DE BREVET EUROPEEN**

(45) Date de publication et mention de la délivrance du brevet:
**18.10.2017   Bulletin 2017/42**

(21) Numéro de dépôt: **15170426.9**

(22) Date de dépôt: **03.06.2015**

(51) Int Cl.:
*C09D 123/08* (2006.01)    *C09D 5/20* (2006.01)
*C09D 131/04* (2006.01)    *C09D 133/04* (2006.01)
*C09D 175/04* (2006.01)    *C09J 7/02* (2006.01)
*C09J 11/04* (2006.01)    *C09J 107/00* (2006.01)
*C09J 123/08* (2006.01)    *C09J 131/04* (2006.01)
*C09J 133/02* (2006.01)    *C09J 133/04* (2006.01)
*C09J 133/08* (2006.01)    *C09J 133/10* (2006.01)
*C09J 175/04* (2006.01)

(54) **COMPOSITION DE COLLE PELABLE**

ZUSAMMENSETZUNG EINES ABZIEHBAREN KLEBERS

PEELABLE ADHESIVE COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.06.2014   FR 1455130**

(43) Date de publication de la demande:
**09.12.2015   Bulletin 2015/50**

(73) Titulaire: **BOSTIK SA**
**93210 La Plaine Saint Denis (FR)**

(72) Inventeurs:
• **Casimiro, Jessie**
  **77170 Brie Comte Robert (FR)**
• **Verscheure, Eric**
  **77670 Vernou la Celle sur Seine (FR)**

(74) Mandataire: **Hirsch & Associés**
**137, rue de l'Université**
**75007 Paris (FR)**

(56) Documents cités:
EP-A1- 1 818 380        FR-A1- 2 984 906
US-A1- 2009 048 380

**Description**

DOMAINE TECHNIQUE

La présente invention concerne une composition de colle pelable. L'invention concerne également une membrane pelable obtenue par séchage de la composition de colle selon l'invention. L'invention a également pour objet l'association d'un revêtement de surface avec la composition de colle pelable, et un procédé d'application d'un revêtement de surface. L'invention concerne également un procédé de rénovation d'un revêtement de surface. L'invention concerne également l'utilisation de la composition de colle pelable pour maintenir un revêtement de surface souple ayant une variabilité dimensionnelle maximale mesurée selon le test de Freudenberg supérieure ou égale à 0,2%.

ETAT DE LA TECHNIQUE

Le remplacement d'un revêtement de sol souple est une opération qui pose depuis longtemps de nombreux problèmes aux professionnels et aux particuliers.

Il existe des solutions de fixation non définitive du revêtement, soit par l'utilisation de bandes adhésives double face soit par l'utilisation d'un fixateur constitué d'un auto-adhésif. Ces solutions permettent une rénovation rapide des locaux mais elles sont à réserver aux pièces résidentielles à faible fréquence de passage. En effet la résistance de la fixation et la durabilité du collage sont faibles. En outre, l'utilisation de bandes adhésives double face provoque des surépaisseurs qui peuvent entraîner des cloques lors de déplacements de meubles ou engendrer l'apparition de traces sur le PVC (appelées fantômes).

Dans le cas d'une fixation à l'aide de colles classiques qui est la solution courante à ce jour, le remplacement pour rénovation d'un revêtement de sol souple préalablement collé (par exemple une moquette), implique une succession d'étapes longues et fastidieuses avant de pouvoir recoller un revêtement neuf. Il faut supprimer les anciens revêtements par arrachage dans un premier temps, puis il convient d'enlever les résidus de colle. On a alors recours soit à des outils manuels (scrapers) soit à l'assistance d'un décolleur ou d'un décapant solvanté.

En cas d'irrégularités il faut encore procéder au ponçage ainsi qu'au ragréage du sol à l'aide d'un enduit de lissage avant de pouvoir appliquer une nouvelle couche de colle pour fixer le revêtement neuf.

En outre, de la colle et potentiellement des résidus de liant inorganique comme du ragréage restent fixés sur le revêtement ancien, ce qui constitue un obstacle à son recyclage.

Dans le cas de surfaces importantes comme des locaux commerciaux, le remplacement du revêtement nécessitera la fermeture des locaux pendant un temps relativement long nécessaire pour l'ensemble des étapes de remise à neuf.

Les revêtements de sol souple en caoutchouc sont utilisés dans de nombreux types de locaux à passages fréquents comme les aéroports ou les hôpitaux. Grâce à leur rigidité, ce type de revêtement se détériore moins rapidement que les sols souples de type PVC. Cependant, les revêtements de caoutchouc sont plus difficiles à coller car ils sont sensibles aux variations de températures et de ce fait ils sont davantage déformables. En effet, lorsque le revêtement souple en caoutchouc est collé avec une colle trop molle ou non adaptée, la colle suit les variations du revêtement et ne le maintient pas. Des phénomènes de cloquage et de poussée au niveau des joints sont alors observés et cela dès les premières heures après affichage du revêtement.

La plupart des colles acryliques classiques ne permettent pas de coller les revêtements en caoutchouc car elles sont trop molles et ne présentent pas une affinité suffisante avec le caoutchouc. De plus, ces colles ne permettent pas de retirer ultérieurement le revêtement sans laisser de résidus ni sur le sol ni sur le revêtement.

La demande EP 2610317 décrit une composition de colle pelable comprenant de 6 à 28% en poids de matière sèche de latex naturel et de 10 à 40% en poids de matière sèche d'une composition polymérique ayant une température de transition vitreuse allant de -50°C à 0°C. Cette demande indique que pour les revêtements présentant une variabilité dimensionnelle importante (cas des revêtements en caoutchouc), il est préférable d'appliquer une colle classique en plus de la composition de colle pelable afin d'assurer un collage satisfaisant.

Il n'existe donc pas à ce jour de solution de collage simple, résistante pour coller et maintenir tous types de revêtements de sol souples, en particulier les revêtements de sol ayant une variabilité dimensionnelle importante, ce collage pouvant ultérieurement être retiré aisément et rapidement afin de retrouver, d'une part le substrat d'origine pour une rénovation, et d'autre part le revêtement souple d'origine pour un recyclage.

RESUME DE L'INVENTION

Le but de la présente invention est de fournir une composition de colle palliant au moins partiellement les inconvénients précités.

A cette fin, la présente invention propose une composition de colle comprenant :

a) de 30% à 45% en poids de matière sèche par rapport au poids total de la composition de colle, d'au moins un latex naturel ou synthétique,

b) de 5% à 40% en poids de matière sèche par rapport au poids total de la composition de colle, d'au moins une composition polymérique ayant une température de transition vitreuse allant de -50°C à 0°C, ladite composition polymérique comprenant :

i) au moins un copolymère ou un mélange d'au moins deux polymères comprenant au moins un monomère (méth)acrylate ou (méth)acrylique, , et/ou

ii) au moins un mélange d'au moins deux polymères comprenant au moins un polyester et au moins un polyuréthane, et/ou

iii) au moins un copolymère d'acétate de vinyle et d'éthylène.

c) de 5 % à 40% en poids par rapport au poids total de la composition de colle d'au moins une charge.

Selon un mode de réalisation de l'invention, le latex représente de 30% à 40%, de préférence de 31% à 38%, en poids de matière sèche par rapport au poids total de la composition de colle.

Selon un mode de réalisation de l'invention, la composition polymérique représente de 6% à 25%, de préférence de 10% à 20% en poids de matière sèche par rapport au poids total de la composition de colle.

Selon un mode de réalisation, la charge présente une densité apparente allant de 0,60 à 1,80, de préférence de 1,30 à 1,70.

Selon un mode de réalisation, le mélange de charges présente une densité apparente allant de 0,60 à 1,80, de préférence de 1,30 à 1,70.

Selon un mode de réalisation de l'invention, la ou les charges représentent de 15% à 35%, de préférence de 20% à 30% en poids du poids total de la composition.

Selon un mode de réalisation de l'invention, la charge est une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice.

Selon un mode de réalisation de l'invention, la composition polymérique présente une température de transition vitreuse allant de -40°C à -10°C, de préférence allant de -37°C à -15°C.

Selon un mode de réalisation de l'invention, la composition polymérique est un terpolymère d'acétate de vinyle, d'éthylène et d'acrylate.

Selon un mode de réalisation de l'invention, la composition polymérique comprend un terpolymère d'acétate de vinyle, d'éthylène et d'acrylate et un mélange de polyester et de polyuréthane.

Selon un mode de réalisation de l'invention, la composition de colle comprend en outre des fibres, de préférence des fibres de cellulose, des fibres de verre, des fibres de caoutchouc, des fibres naturelles, telles que coton, viscose, jute, sisal, ou des fibres synthétiques, telles que polyamide, polyester, polyacrylonitrile, polypropylène, polyéthylène.

La présente invention propose également une membrane obtenue par séchage de la composition de colle selon l'invention.

La présente invention concerne également l'association d'un revêtement de surface souple avec une composition de colle selon l'invention.

La présente invention propose également un procédé d'application d'un revêtement de surface souple sur un substrat comprenant les étapes suivantes :

a) application d'une couche de composition de colle selon l'invention sur le substrat,

b) affichage du revêtement souple sur le substrat.

Selon un mode de réalisation de l'invention, le revêtement souple est un revêtement ayant une variabilité dimensionnelle maximale mesurée selon le test de Freudenberg supérieure ou égale à 0,2%.

Selon un mode de réalisation de l'invention, la quantité de composition de colle appliquée est supérieure ou égale à 200 g/m$^2$, de préférence supérieure ou égale à 250 g/m$^2$, de préférence encore supérieure ou égale à 300 g/m$^2$, plus particulièrement supérieure ou égale à 350 g/m$^2$.

Selon un mode de réalisation de l'invention, le procédé d'application comprend avant l'étape a), une étape d'application d'une trame ou d'une bande d'armature tissée ou non-tissée sur le substrat.

L'invention propose également un substrat revêtu d'une membrane de colle pelable selon l'invention et d'un revêtement de surface souple.

Selon un mode de réalisation de l'invention, le revêtement de surface souple est un revêtement de surface souple ayant une variabilité dimensionnelle maximale mesurée selon le test de Freudenberg supérieure ou égale à 0,2%.

L'invention propose en outre un procédé de rénovation d'un substrat selon l'invention, comprenant une étape de dépose du revêtement de surface souple.

L'invention propose également l'utilisation de la composition de colle selon l'invention, pour maintenir un revêtement de surface souple ayant une variabilité dimensionnelle maximale mesurée selon le test de Freudenberg supérieure ou égale à 0,2%.

Les avantages de la présente invention sont les suivants :

- la composition de colle de l'invention permet de coller et maintenir tous types de revêtements, en particulier les revêtements ayant une forte variabilité dimensionnelle, sans avoir à utiliser une colle forte supplémentaire,
- la composition de l'invention permet après séchage de séparer facilement le revêtement souple du substrat, tout en laissant le substrat et le revêtement intacts sans pratiquement aucun résidu de colle,
- la composition de l'invention est une composition de collage qui après séchage forme un film, aussi appelé membrane, pelable. Une seule composition permet donc d'assurer le collage et le décollage ultérieur du revêtement,
- la composition de colle de l'invention offre un collage durable adapté aux locaux à fort trafic,
- la composition de colle de l'invention est aussi bien adaptée à une application aux sols qu'aux murs,
- le procédé d'application du revêtement de surface de l'invention est simple à mettre en oeuvre puisqu'il ne nécessite l'application que d'une seule couche de colle,
- le procédé de collage du revêtement de surface de l'invention ne nécessite pas l'emploi de plusieurs revêtements dont l'un resterait fixé durablement au sol,
- le revêtement et la colle pelable de l'invention peuvent être retirés manuellement, sans nécessiter l'utilisation d'outils de type scraper. Le film issu du séchage de la composition de colle peut être enlevé du substrat ou du revêtement sans utilisation de produits chimiques et sans avoir recours à un outillage mécanique particulier,
- l'invention permet un recyclage du revêtement, après décollage et retrait (ou dépose) du film pelable, celui-ci étant dépourvu de résidu de colle.

D'autres caractéristiques et avantages de l'invention apparaîtront à la lecture de la description qui suit, d'un mode de réalisation préféré de l'invention, donné à titre d'exemple, et en référence au dessin annexé.

BREVE DESCRIPTION DES FIGURES

La figure 1 est un schéma représentant un mode de réalisation de l'invention après application de la colle pelable (1) et du revêtement souple (2) sur un substrat (3).
La figure 2 est un schéma représentant l'état du substrat (3) et du revêtement souple (2) après rénovation.
La figure 3 est un schéma illustrant un procédé de collage d'un revêtement souple (2) faisant intervenir une trame ou une bande d'armature tissée ou non-tissée (5).
La figure 4 est une photo illustrant le phénomène de cloquage et tuilage.
La figure 5 est un schéma illustrant le dispositif du test de Freudenberg.

DESCRIPTION DETAILLEE DE L'INVENTION

La présente invention propose une composition de colle pelable comprenant :

- de 30 à 45% en poids de matière sèche par rapport au poids total de la composition de colle d'au moins un latex naturel ou synthétique,
- de 5% à 40% en poids de matière sèche par rapport au poids total de la composition de colle, d'au moins une composition polymérique ayant une température de transition vitreuse allant de -50°C à 0°C, ladite composition polymérique comprenant :

  o au moins un copolymère ou un mélange d'au moins deux polymères comprenant au moins un monomère (meth)acrylate ou (meth)acrylique, et/ou
  o au moins un mélange d'au moins deux polymères comprenant au moins un polyester et au moins un polyuréthane, et/ou
  o au moins un copolymère d'acétate de vinyle et d'éthylène,

- de 5 % à 40% en poids d'au moins une charge.

Par composition de colle pelable, on entend une composition de colle qui après application sur un substrat et séchage forme un film, ou membrane, qui peut être facilement retiré sans laisser de résidus.

Selon la présente invention, le latex peut être un latex naturel par exemple obtenu à partir de l'hévéa ou un latex synthétique qui peut être obtenu par polymérisation de l'isoprène. Parmi les latex utilisables dans les compositions de colle selon l'invention, on peut citer les émulsions de polymères de type polyisoprénoïde.

De préférence, le latex est un latex naturel. En particulier, le latex naturel peut être un latex naturel de grade standard, un latex naturel ayant une faible teneur en ammoniac, un latex naturel ayant une forte teneur en ammoniac. Généralement, l'eau représente de 30% à 45% du poids du latex naturel, typiquement 38,5% du poids du latex naturel.

De préférence, le latex naturel est un latex naturel ayant une teneur en ammoniac allant de 0,05 à 1% en poids par rapport au poids de latex naturel. On peut choisir un latex naturel ayant une faible teneur en ammoniac, c'est-à-dire généralement allant de 0,05% à 0,4%, de préférence inférieure à 0,1% en poids par rapport au poids de latex naturel, ou bien un latex naturel ayant une forte teneur en ammoniac, c'est-à-dire généralement allant de 0,5 à 1% en poids par rapport au poids de latex naturel. Il est bien connu de l'homme du métier que l'ammoniac permet de stabiliser le latex naturel.

Les copolymères ou les polymères utilisés dans l'invention pour former la composition polymérique, peuvent être sous la forme d'une émulsion aqueuse ou sous la forme d'une poudre redispersable qui, après ajout d'eau, forme une solution aqueuse. La forme sous laquelle est employé le copolymère ou le mélange de polymères dépend de sa solubilité dans l'eau.

Selon un mode de réalisation, la ou les charges présentent une densité apparente allant de 0,60 à 1,80, de préférence allant de 1,30 à 1,70.

Dans le cas où la composition adhésive comprend un mélange de plusieurs charges différentes (différence de nature chimique et/ou de propriétés), chaque charge prise individuellement présente de préférence une densité apparente allant de 0,10 à 1,80.

Selon un mode de réalisation, les charges présentent une densité apparente allant de 0,60 à 1,80 et chaque charge prise individuellement présente une densité apparente allant de 0,10 à 1,80. Il est en effet possible de prévoir un mélange d'au moins deux charges, au moins une charge ayant une densité apparente allant de 0,10 à 1,00 et au moins une charge ayant une densité apparente supérieure à 1,00 et inférieure ou égale à 1,80.

La densité apparente est mesurée par des méthodes classiques bien connues de l'homme du métier, par exemple par pesée d'un volume déterminé telle que décrite dans la partie expérimentale de la présente invention. La densité apparente est définie par le rapport entre la masse du matériau et le volume apparent de l'ensemble des grains.

La présence de la charge permet de contrôler et d'augmenter l'épaisseur du film de colle pelable sans augmenter son coût. Une épaisseur plus importante augmente la cohésion du film et facilite son retrait après séchage.

Selon un mode de réalisation de la présente invention, la charge est une charge minérale. De préférence la charge est choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice. Plus particulièrement, la charge est choisie parmi le carbonate de calcium et le sable.

On peut également envisager d'utiliser seule(s) ou en combinaison avec une ou plusieurs charges minérales, une ou plusieurs charges organiques.

Le latex naturel représente de 30% à 45% en poids de matière sèche par rapport au poids total de la composition de colle, de préférence de 30% à 40% en poids de matière sèche par rapport au poids total de la composition de colle, de préférence encore de 31% à 38% en poids de matière sèche par rapport au poids total de la composition de colle.

La composition polymérique représente de 5 à 40% en poids de matière sèche par rapport au poids total de la composition de colle, de 6% à 25% en poids de matière sèche par rapport au poids total de la composition de colle, de préférence encore de 10% à 20% en poids de matière sèche par rapport au poids total de la composition de colle.

Selon un mode de réalisation, le ratio (m/m) entre la masse de latex (masse sèche) et la masse de composition polymérique (matière sèche) va de 0,75 à 4,5, de préférence de 1,2 à 2,5.

Selon un mode de réalisation, la ou les charges représentent de 15% à 35% en poids du poids total de la composition de colle, de préférence de 20% à 30% en poids du poids total de la composition de colle.

Dans la composition de colle, l'eau est apportée par le latex, par l'émulsion aqueuse de copolymère ou de mélange de polymères et par un ajout d'eau éventuel. En effet, en fonction de la dilution du copolymère ou du mélange de polymères, on peut être amené à ajouter de l'eau pour obtenir la concentration souhaitée de matière active.

Selon un mode de réalisation, l'eau représente de 20% à 60% en poids du poids total de la composition de colle, de préférence de 30% à 50% en poids du poids total de la composition de colle.

Selon un mode de réalisation de l'invention, la composition de colle pelable comprend un ou plusieurs autres additifs choisis parmi : un épaississant, un biocide, un antimousse, un stabilisant de latex, un masquant d'odeur, un ajusteur de pH et/ou un anti-oxydant.

L'épaississant permet notamment de maintenir la ou les charges en suspension.

De préférence, l'épaississant est une solution aqueuse de polyacrylate de sodium ou une solution aqueuse de polyuréthane. Généralement l'épaississant a une température de transition vitreuse de l'ordre de 200°C, bien supérieure aux températures de transition vitreuse des copolymères ou des mélanges de polymères définis précédemment.

De préférence, l'épaississant représente de 0,1 à 5%, de préférence de 0,5% à 5% en poids du poids total de la composition de colle.

De préférence les autres additifs représentent de 0,5% à 5% en poids du poids total de la composition de colle.

De préférence, la composition polymérique a une température de transition vitreuse (Tg) allant de -40°C à -10°C, plus particulièrement de -37°C à -15°C. De manière classique, bien connue de l'homme du métier, la température de transition vitreuse peut être mesurée par DSC (« Differential Scanning Calorimetry » en anglais ou « calorimétrie différentielle à balayage » en français).

Par copolymère comprenant au moins un monomère (meth)acrylate ou (meth)acrylique, on entend un polymère formé à partir d'au moins deux monomères, dont un monomère (meth)acrylate ou (meth)acrylique.

Par mélange de polymères comprenant au moins un monomère (meth)acrylate ou (meth)acrylique, on entend un mélange comprenant au moins deux polymères dont un polymère au moins est formé à partir de monomères (meth)acrylate ou (meth)acrylique.

Selon un mode de réalisation, le monomère (meth)acrylate ou (meth)acrylique est choisi parmi l'acide acrylique, l'acide méthacrylique, l'acrylate de méthyle, le méthacrylate de méthyle, l'acrylate d'éthyle, le méthacrylate d'éthyle, l'acrylate de butyle, le méthacrylate de butyle, l'acrylate d'isobutyle, le méthacrylate d'isobutyle, l'acrylate de n-hexyle, le méthacrylate de n-hexyle, l'acrylate d'éthylhexyle, le méthacylate d'éthylhexyle, l'acrylate de n-heptyle, le méthacrylate de n-heptyle, l'acrylate de stéaryle, le méthacrylate de stéaryle, le méthacrylate de glycidyle, l'acrylamide, le méthacrylamide, l'acrylate d'hydroxyéthyle, le méthacrylate d'hydroxyéthyle, le méthacrylate d'allyle, l'acrylate de cyclohexyle, le méthacrylate de cyclohexyle, le 2-éthoxyéthyle-acrylate, le 2-éthoxyéthyle-méthacrylate, l'acrylate d'isodécyle, le méthacrylate d'isodécyle, le 2-méthoxy acrylate, le 2-éthoxy-méthacrylate, le 2-(2-éthoxyéthoxy)-éthylacrylate, l'acrylate de 2-phénoxyéthyle, le méthacrylate de 2-phénoxyéthyle, l'acrylate d'isobomyle, le méthacrylate d'isobomyle, l'acrylate de caprolactone, le méthacrylate de caprolactone, le monoacrylate de polypropylène glycol, le monométhacrylate de polypropylène glycol, l'acrylate de polyéthylène glycol, le méthacrylate de polyéthylène glycol, l'acrylate de benzyle, le méthacrylate de benzyle.

Selon un mode de réalisation particulier de l'invention, la composition polymérique ayant une température de transition vitreuse allant de -50°C à 0°C comprend au moins un copolymère ou un mélange d'au moins deux polymères comprenant au moins un monomère (meth)acrylate ou (meth)acrylique.

Selon un mode de réalisation particulier de l'invention, la composition polymérique ayant une température de transition vitreuse allant de -50°C à 0°C consiste essentiellement en un ou plusieurs copolymères ou un mélange d'au moins deux polymères comprenant au moins un monomère (meth)acrylate ou (meth)acrylique.

Selon un mode de réalisation, le copolymère ou le mélange de polymères comprenant au moins un monomère (meth)acrylate ou (meth)acrylique comprend un ou plusieurs autres monomères choisis parmi l'acétate de vinyle, l'éthylène, le styrène, le chlorure de vinyle, le versatate de vinyle et le laurate de vinyle.

Selon un mode de réalisation, le copolymère comprenant au moins un monomère (meth)acrylate ou (meth)acrylique est un terpolymère d'acétate de vinyle, d'éthylène et d'acrylate.

Selon un mode de réalisation de l'invention, la composition polymérique ayant une température de transition vitreuse allant de -50°C à 0°C comprend au moins un mélange d'au moins deux polymères comprenant au moins un polyester et au moins un polyuréthane.

De préférence, la composition polymérique consiste essentiellement en un mélange de polyesters et de polyuréthanes.

Selon un mode de réalisation, les polyuréthanes sont obtenus à partir d'au moins un polyol et d'au moins un polyisocyanates.

Avantageusement, les polyols sont choisis parmi l'éthylène glycol, le 1,2-propylène glycol, le 1,3-propylène glycol, le 1,4-butanediol, le 1,3-butanediol, le 1,4-butènediol, le 1,4-butynediol, le 1,5-pentanediol, le 1,6-hexanediol, le 1,8-octanediol, le néopentylglycol, le yclohexanediméthanol, le 2-méthyl-1,3-propanediol, le 1,5-pentanediol, le diéthylène glycol, le triéthylène glycol, le tétraéthylène glycol, le polyéthylène glycol, le dipropylène glycol, le polypropylène glycol, le dibutylène glycol et le polybutylène glycol.

De préférence, les polyisocyanates sont choisis parmi les diisocyanates linéaires ou ramifiés comprenant une chaîne alkylène de 4 à 14 atomes de carbone, les diisocyanates cycloaliphatiques comprenant de 6 à 12 atomes de carbone, les diisocyanates aromatiques comprenant de 8 à 14 atomes de carbone, les polyisocyanates comprenant des isocyanurates, des diisocyanates uretdione, les diisocyanates comprenant des biourets, les polyisocyanates comprenant des groupements uréthanes et/ou allophanates, des polyisocyanates comprenant des groupements oxadiazinetrione, les polyisocyanates modifiée urétonimine, ou leurs mélanges.

Selon un mode de réalisation, les diisocyanates sont choisis parmi le tétraméthylène diisocyanate, l'hexaméthylène diisocyanate, l'octaméthylène diisocyanate, le décaméthylène diisocyanate, le dodécaméthylène diisocyanate, le tétradécaméthylène diisocyanate, le diisocyanate de trimethylhexane, le diisocyanate de tétraméthylhexane, le 1,4-diisocyanatocyclohexane, le 1,3-diisocyanatocyclohexane, le 1,2-diisocyanatocyclohexane, le 4,4'-di(isocyanatocyclohexyl)méthane, le 1,4-diisocyanatocyclohexène, le 1,3-diisocyanatocyclohexène, le 1,2-diisocyanatocyclohexène, l'isophorone diisocyanate (IPDI), le 2,4-diisocyanato-1-méthylcyclohexane, le 2,6-diisocyanato-1-méthylcyclohexane, le 2,4-diisocyanatotoluène, le 2,6-diisocyanatotoluène, le tétraméthylxylylène diisocyanate, le 1,4-diisocyanatobenzène, le 4,4'-diisocyanatodiphénylméthane, le 2,4-diisocyanatodiphénylméthane, le p-xylylène diisocyanate et l'isopropényldiméthyltolylène diisocyanate.

Selon un mode de réalisation, les polyesters sont choisis parmi les polyesters de polyol. De préférence, les polyesters sont obtenus à partir d'acides polycarboxyliques et/ou d'anhydrides polycarboxyliques et/ou de polycarboxylates et de polyols.

Les acides polycarboxyliques peuvent être aliphatiques, cycloaliphatiques, aromatiques ou hétérocycliques, ils peuvent être non substitués ou substitués, par exemple par un halogène, et ils peuvent être saturés ou insaturés.

Selon un mode de réalisation, les acides polycarboxyliques, les anhydrides polycarboxyliques sont choisis parmi l'acide succinique, l'acide adipique, l'acide subérique, l'acide azélaïque, l'acide sébacique, l'acide phtalique, l'acide isophtalique, l'anhydride phtalique, l'anhydride tétrahydrophtalique, l'anhydride hexahydrophtalique, l'anhydride tétrachlorophtalique, l'anhydride endométhylènetétrahydrophtalique, l'anhydride glutarique, l'acide maléïque, l'anhydride maléïque, l'acide fumarique.

Parmi les polyols qui peuvent être utilisés pour la fabrication du polyester, on peut citer l'éthylène glycol, le 1,2-propylène glycol, le 1,3-propylène glycol, le 1,4-butanediol, le 1,3-butanediol, le 1,4-butènediol, le 1,4-butynediol, le 1,5-pentanediol, le 1,6-hexanediol, le 1,8-octanediol, le néopentylglycol, le cyclohexanediméthanol, le 2-méthyl-1,3-propanediol, le 1,5-pentanediol, le diéthylène glycol, le triéthylène glycol, le tétraéthylène glycol, le polyéthylène glycol, le dipropylène glycol, le polypropylène glycol, le dibutylène glycol et le polybutylène glycol.

Selon un mode de réalisation de l'invention, la composition polymérique ayant une température de transition vitreuse allant de -50°C à 0°C comprend au moins un copolymère d'acétate de vinyle et d'éthylène.

Selon un mode de réalisation de l'invention, la composition polymérique ayant une température de transition vitreuse allant de -50°C à 0°C comprend un mélange :

- d'au moins un copolymère ou un mélange d'au moins deux polymères comprenant au moins un monomère (méth)acrylate ou (méth)acrylique tels que définis ci-dessus, et
- d'au moins un mélange d'au moins deux polymères comprenant au moins un polyester et au moins un polyuréthane tels que définis ci-dessus.

Selon un mode de réalisation de l'invention, la composition polymérique ayant une température de transition vitreuse allant de -50°C à 0°C consiste essentiellement en un mélange :

- d'un ou plusieurs copolymères ou un mélange d'au moins deux polymères comprenant au moins un monomère (méth)acrylate ou (méth)acrylique tels que définis ci-dessus, et
- un mélange d'au moins un polyester et au moins un polyuréthane tels que définis ci-dessus.

Selon un mode de réalisation de l'invention, les charges ont une densité apparente allant de 0,60 à 1,80, de préférence allant de 1,30 à 1,70, de préférence encore de 1,40 à 1,60.

Comme indiqué précédemment, il est possible de prévoir un mélange de plusieurs charges, ledit mélange présentant une densité apparente allant de 0,60 à 1.80, de préférence allant de 1,30 à 1,70, de préférence encore de 1,40 à 1,60, chaque charge prise individuellement présentant une densité apparente allant de 0,10 à 1,80.

De préférence, la charge a une granulométrie allant de 10 à 400 $\mu$m.

L'homme du métier peut ajuster les proportions et le choix des monomères afin d'obtenir un copolymère ou un mélange de polymères ayant la température de transition vitreuse désirée.

Les émulsions de (co)polymère(s) qui peuvent être utilisées pour la préparation de la composition de colle de l'invention sont disponibles commercialement. On peut citer les produits suivants:

- PLEXTOL® D 306 (disponible auprès de Synthomer) : dispersion aqueuse de résine acrylique pure à base de n-butylacrylate (98%) et de styrène (2%) ayant une température de transition vitreuse de -30°C,
- VINNAPAS® EAF 68 (disponible auprès de Wacker) : dispersion aqueuse de résine acrylique à base d'acétate de vinyle, d'éthylène et d'acrylate ayant une température de transition vitreuse de -35°C,
- ACRONAL® A 380 (disponible auprès de BASF) : dispersion aqueuse de résine acrylique à base d'acrylate(s) et d'acrylonitrile ayant une température de transition vitreuse de -22°C,
- LUPHEN® D DS 3548 (disponible auprès de BASF) : dispersion d'une résine à base d'ester et d'uréthane ayant une température de transition vitreuse de -46°C,
- VINNAPAS® EP 8010 (disponible auprès de Wacker) : Dispersion aqueuse de résine à base d'acétate de vinyle (83%) et d'éthylène (17%) ayant une température de transition vitreuse de -10°C.

Selon un mode de réalisation de l'invention, la composition de colle pelable comprend en outre des fibres, telles que des fibres de cellulose, des fibres de verre, des fibres de caoutchouc, des fibres naturelles, telles que coton, viscose, jute, sisal ou des fibres synthétiques, telles que polyamide, polyester, polyacrylonitrile, polypropylène, polyéthylène. De préférence, les fibres représentent de 0,01 à 2% en poids par rapport au poids de la composition de colle pelable.

Les fibres permettent, après séchage de la composition, d'augmenter la cohésion de la membrane (ou du film) ainsi obtenue.

Selon un mode de réalisation de l'invention, la composition de colle comprend en outre jusqu'à 10% en poids d'une résine tackifiante, de préférence choisie parmi les esters de colophane, les résines terpéniques, les résines terpène phénoliques et les dispersions à base de résine terpène phénolique.

La résine tackifiante permet d'améliorer le caractère piégeant de la colle. Cela permet de mieux maintenir les matériaux ensemble dès leur assemblage pour qu'ils ne glissent pas et ne se déplacent pas l'un par rapport à l'autre. Ainsi, le film de colle reste continu et immobile pendant la durée de prise et le collage ne s'ouvre pas.

Un autre objet de la présente invention est un procédé de fabrication de la colle pelable selon l'invention. La colle pelable est fabriquée par simple mélange des composants. De préférence, le latex est ajouté en premier et l'épaississant en dernier. Après fabrication, la composition de colle est stockée à l'abri de la lumière et de l'air à une température allant de 5°C à 40°C, de préférence de 10°C à 30°C.

Dans le cas où le copolymère ou le mélange de polymères est sous forme d'une poudre redispersable, le copolymère ou le mélange de polymères est intégré à la composition de colle par un ajout supplémentaire d'eau afin d'obtenir une solution aqueuse.

Un autre objet de la présente invention concerne une membrane obtenue par séchage de la composition de colle pelable selon l'invention.

En effet, la composition de colle pelable selon l'invention peut être appliquée sur un substrat, par exemple le sol, puis, après séchage de ladite composition de colle, celle-ci forme une membrane pelable.

Selon un mode de réalisation, la membrane pelable a une épaisseur supérieure ou égale à 100 $\mu$m, de préférence supérieure ou égale à 125 $\mu$m, plus particulièrement supérieure ou égale à 150 $\mu$m. L'homme du métier sait adapter l'épaisseur maximale en fonction des conditions de mise en application. En effet, il est souhaitable de ne pas avoir une épaisseur trop importante pour un revêtement de surface collé sur un substrat. Plus particulièrement, l'épaisseur de la membrane (ou film) pelable peut être inférieure ou égale à 1 millimètre.

Selon un mode de réalisation de l'invention, la membrane pelable peut être obtenue par application de la composition de colle pelable selon l'invention sur une trame ou une bande d'armature non-tissée.

De préférence, la trame est sous la forme d'un grillage, d'un matériau tissé ou non-tissé.

Le matériau constituant la trame peut être un métal, des fibres naturelles ou synthétiques ou un plastique ou sous la forme d'une bande d'armature tissée ou non-tissée.

On peut citer par exemple une trame en fibre de verre, en polyamide, une grille métallique, un matériau non-tissé obtenu par fusion de fibres enchevêtrées de polypropylène ou polyéthylène, un matériau tissé de polyester.

Selon un mode de réalisation, un revêtement est appliqué directement sur la membrane pelable. Dans ce cas, le substrat et le revêtement peuvent être décollés et présenter après décollage des surfaces intactes, c'est-à-dire sans résidu de colle après retrait du revêtement.

Dans le cas où une trame est utilisée, le collage est renforcé et le retrait de la membrane de la surface du revêtement et de la surface du substrat est facilité.

Selon un mode de réalisation, la trame est adhésivée (trame pré-encollée prête à l'emploi), i.e. qu'elle comprend une composition de colle, par exemple une composition de colle de type PSA (en anglais « pressure sensitive adhesive », « colle sensible à la pression » en français) c'est à dire une composition de colle thermofusible (en anglais « hotmelt adhesive ») ou bien une composition de colle acrylique ou une composition de colle à base de poly(styrène-isoprène-styrène) ou une composition de colle à base de poly(styrène-butadiène-styrène). Selon ce mode de réalisation, la trame est adhésivée avec une composition de colle différente de la composition de colle pelable selon l'invention. Selon ce mode de réalisation, la trame est mieux maintenue au sol, ce qui facilite l'application ultérieure de la composition de colle pelable selon l'invention.

Un autre objet de la présente invention est l'association d'un revêtement de surface souple avec une composition de colle pelable selon l'invention.

En effet, il peut être judicieux d'associer au sein d'un kit destiné aux professionnels ou aux particuliers, un revêtement de surface souple et une composition de colle en quantités adaptées à la surface à revêtir.

Une trame peut également faire partie du kit.

Les revêtements de surface souples utilisés dans l'invention sont ceux qui remplissent les conditions édictées dans les normes DTU 53.1 et 53.2.

La composition de colle selon la présente invention convient tout particulièrement pour coller et maintenir des revêtements de surface souple présentant une forte variabilité dimensionnelle, de préférence des revêtements de surface souple présentant une variabilité dimensionnelle maximale supérieure ou égale à 0,2%, de préférence supérieure ou égale à 0,3%, de préférence allant de 0,3% à 1%, de préférence encore allant de 0,4 à 0,8%.

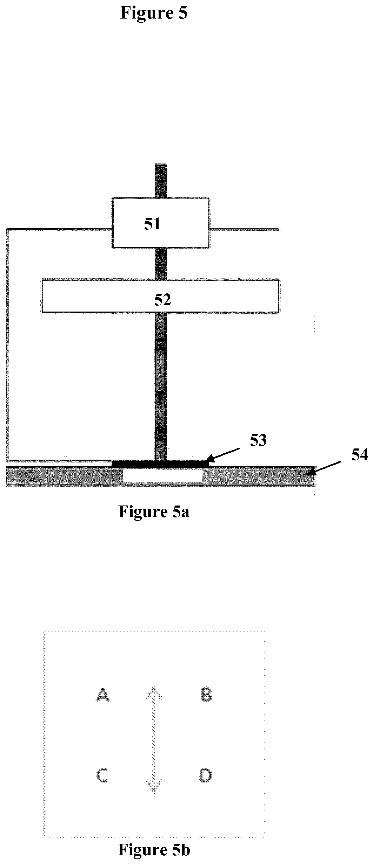

La variabilité dimensionnelle maximale du revêtement est mesurée selon le test Freudenberg tel que décrit dans la partie expérimentale. La variabilité dimensionnelle maximale correspond à la valeur maximale de variation dimensionnelle mesurée selon une des directions AB, AC, CD ou BD (voir figure 5).

Parmi les revêtements à forte variabilité dimensionnelle qui peuvent être mis en oeuvre dans la présente invention, on peut citer les revêtements en caoutchouc ou les lames et les dalles de LVT (« en anglais « Luxury Vinyl Tile » ou « dalle de vinyle haut de gamme » en français).

Toutefois, la composition de colle selon la présente invention peut être utilisée pour coller et maintenir d'autres types de revêtements, tels que les moquettes ou les revêtements de sol en polymère, par exemple en PVC, ou les revêtements linoléums. On peut citer plus particulièrement les caoutchoucs en dalles ou en lés.

Parmi ce type de revêtements, on peut citer les moquettes tricotées, touffetées, tissées et floquées, en lés ou en dalles, notamment celles qui répondent aux exigences de la NF EN 1307, ainsi que les revêtements de sol aiguilletés en lés ou en dalles, notamment ceux qui répondent aux exigences de la NF EN 1470 et prEN 13297. On peut citer les moquettes classiques en laine ou en synthétique, et les revêtements en fibres naturelles.

Parmi les revêtements en polymère, on peut citer les exemples suivants (voir la norme DTU 53.2) :

- Revêtements de sol homogènes et hétérogènes à base de polychlorure de vinyle
- Revêtements de sol à base de polychlorure de vinyle sur support de jute ou de polyester ou sur support de polyester avec envers en polychlorure de vinyle
- Revêtements de sol à base de polychlorure de vinyle sur mousse
- Revêtements de sol à base de polychlorure de vinyle avec support à base de liège
- Revêtements de sol à base de polychlorure de vinyle expansé
- Dalles semi flexibles à base de polychlorure de vinyle
- Dalles d'aggloméré de liège avec couche d'usure à base de polychlorure de vinyle
- Revêtements souples à base de polymères d'origine renouvelable (d'origine agricole notamment) tels que les polymères PLA (acide polylactique) ou polyoléfine (l'oléfine étant issue notamment de bio-éthanol).

On peut donc utiliser dans l'invention un grand nombre de revêtements différents, par exemples les revêtements suivants :

- P.V.C. homogènes (dalles ou lés)
- P.V.C multicouches (dalles ou lés)
- P.V.C sur liège
- Polyoléfines
- Linoléums en lés
- Caoutchoucs en dalles ou en lés
- Vinyles Expansés Reliefs (V.E.R.)
- Dalles semi-flexibles
- Aiguilletés avec ou sans envers
- Moquettes sur mousse (latex)
- Moquettes à envers non tissés
- Moquettes dossiers synthétiques (type Action Back)
- Coco, sisal et jonc de mer à envers latexés.

Un autre objet de l'invention concerne un procédé d'application d'un revêtement de surface souple sur un substrat comprenant les étapes suivantes :

a) application d'une couche de composition de colle pelable selon l'invention sur le substrat,
b) affichage du revêtement de surface souple sur le substrat.

Le substrat sur lequel s'applique le revêtement de l'invention est tout support traditionnel recevant ce type de revêtement. On peut citer par exemple les bétons surfacés (notamment avec un parement soigné), les chapes base ciment (incorporées ou rapportées), les chapes anhydrite, les ragréages, les anciens carrelages, anciens parquets convenablement lissés, les panneaux de particules ou les contreplaqués, les parements de murs classiques.

L'affichage du revêtement de surface souple sur le substrat correspond à l'action d'appliquer ou poser le revêtement sur le substrat revêtu de la couche de composition de colle pelable.

Selon un mode de réalisation préféré, le revêtement de surface souple est un revêtement à forte variabilité dimensionnelle, de préférence un revêtement de surface souple présentant une variabilité dimensionnelle maximale supérieure ou égale à 0,2%, de préférence supérieure ou égale à 0,3%, de préférence allant de 0,3% à 1%, de préférence encore allant de 0,4 à 0,8%, mesurée selon le test de Freudenberg décrit dans la partie expérimentale.

De préférence, le revêtement de surface souple est choisi parmi les revêtements en caoutchouc ou les lames et les dalles de LVT (« en anglais « Luxury Vinyl Tile » ou « dalle de vinyle haut de gamme » en français).

Selon un mode de réalisation de l'invention, la quantité de composition de colle pelable est supérieure ou égale à 250 g/m$^2$, de préférence supérieure ou égale à 300 g/m$^2$, plus particulièrement supérieure ou égale à 350 g/m$^2$.

L'application de la composition de colle pelable s'effectue de manière continue ou discontinue sur le substrat.

De préférence, la couche de colle est appliquée directement sur le substrat. Le substrat n'est en général pas primarisé avant application de la couche de colle. Par exemple un carrelage subit un simple décapage avant application de la couche de colle. Les substrats sont ceux cités dans la norme DTU 53.1.

De manière classique, le revêtement de surface souple est posé après l'observation d'un temps de gommage allant de 10 à 45 minutes. Le temps de gommage correspond à la période pendant laquelle la composition de colle appliquée s'épaissit et augmente son pouvoir d'adhérence.

De préférence, le procédé d'application de l'invention présente une étape supplémentaire c) de marouflage afin de faciliter le transfert de la colle au dos du revêtement souple. Cette étape permet notamment d'étaler la composition de colle afin de rendre la composition de colle appliquée continue ou quasi-continue sur le substrat.

L'utilisateur peut poser le revêtement souple dans un intervalle de temps défini par le temps de travail qui est de l'ordre de 30 minutes et qui peut être modulé par l'ajout d'additifs. Le temps de travail commence à courir à la fin du temps de gommage et se termine au moment où la colle a perdu son caractère adhésif.

Après séchage de la composition de colle, un film (aussi appelé membrane) de colle pelable est obtenu.

Selon un mode de réalisation, le film ou membrane de colle pelable présente une épaisseur supérieure ou égale à 100 $\mu$m, de préférence supérieure ou égale à 125 $\mu$m, plus particulièrement supérieure ou égale à 150 $\mu$m. L'homme du métier sait adapter l'épaisseur maximale en fonction des conditions de mise en application. En effet, il est souhaitable de ne pas avoir une épaisseur trop importante pour un revêtement de surface collé sur un substrat. Plus particulièrement, l'épaisseur du film de colle pelable peut être inférieure ou égale à 1 millimètre.

L'invention s'applique de façon préférentielle pour les revêtements de sols, mais peut aussi s'appliquer sur les murs.

Selon un mode de réalisation particulier du procédé d'application d'un revêtement de surface souple selon l'invention, une trame est déposée sur le substrat avant l'étape a) d'application de la couche de composition de colle pelable.

De préférence, la trame est sous la forme d'un grillage, d'un matériau tissé ou non-tissé ou d'une bande d'armature non-tissée.

Le matériau constituant la trame peut être un métal, des fibres naturelles ou synthétiques ou un plastique.

On peut citer par exemple une trame en fibre de verre, en polyamide, une grille métallique, un matériau non-tissé obtenu par fusion de fibres enchevêtrées de polypropylène ou polyéthylène, un matériau tissé de polyester.

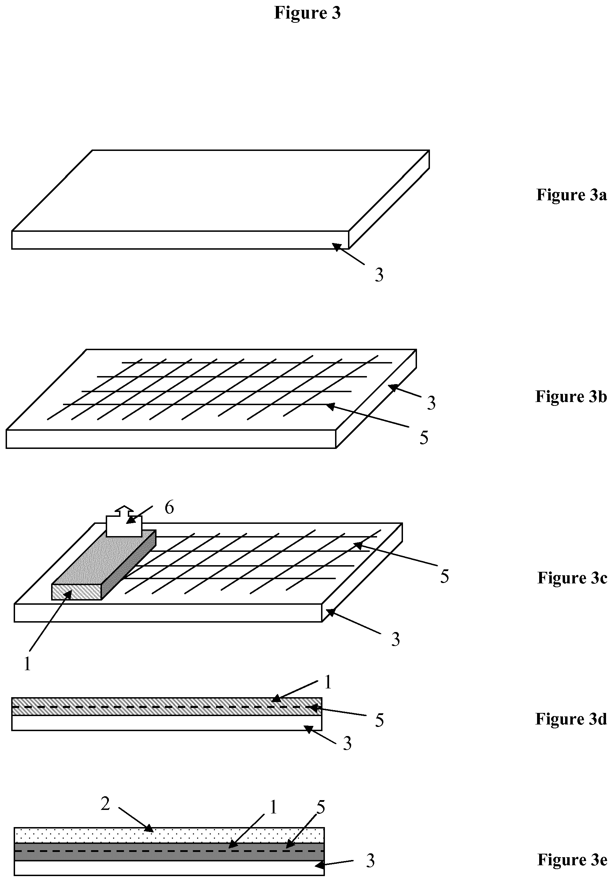

La figure 3 illustre un mode de réalisation particulier de l'invention. La figure 3a représente en perspective le substrat 3 initial. La figure 3b représente en perspective le substrat 3 sur lequel une trame 5 est déposée. La figure 3c représente en perspective le substrat 3 recouvert par la trame 5 sur lequel la composition de colle 1 est appliquée à l'aide d'un applicateur 6. La figure 3d représente en coupe le substrat 3 recouvert par la composition de colle 1. La trame 5 est alors imprégnée de la composition de colle 1. Puis, un revêtement souple 2 est appliqué sur la composition de colle 1 comprenant la trame 5, comme illustré sur la figure 3e.

Alternativement, la trame peut être pré-adhésivée avec une composition de colle, différente de la composition de colle pelable selon l'invention, par exemple avec une composition de colle de type PSA c'est à dire une composition de colle thermofusible ou une composition de colle acrylique ou une composition de colle à base de poly(styrène-isoprène-styrène) ou une composition de colle à base de poly(styrène-butadiène-styrène).. De préférence, le procédé d'application est suivi d'une étape supplémentaire c) de marouflage.

Un autre objet de la présente invention est un substrat revêtu du film pelable selon l'invention et du revêtement de surface souple.

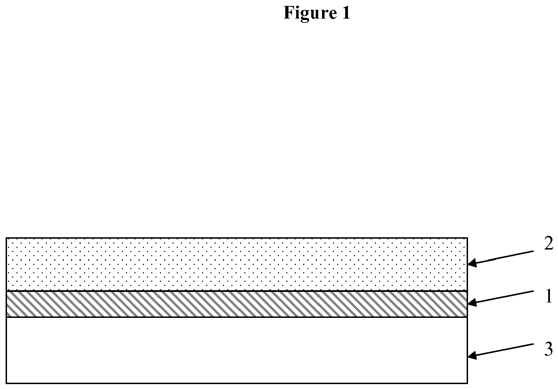

La figure 1 représente le revêtement souple 2 collé sur un substrat 3 au moyen de la colle pelable 1 selon l'invention.

Un autre objet de la présente invention est un procédé de rénovation d'un substrat comportant un revêtement de surface, ce procédé comprenant une étape de dépose d'un revêtement souple selon l'invention.

La dépose du revêtement de surface correspond à l'action d'enlever, de retirer, de décoller ou d'arracher le revêtement.

L'étape de dépose s'effectue en exerçant une force de pelage sur le revêtement pour que la couche constituée par le film de colle pelable à l'interface film pelable/substrat et film pelable/revêtement souple se retire aisément, laissant le substrat et le revêtement souple tels qu'ils étaient avant le collage.

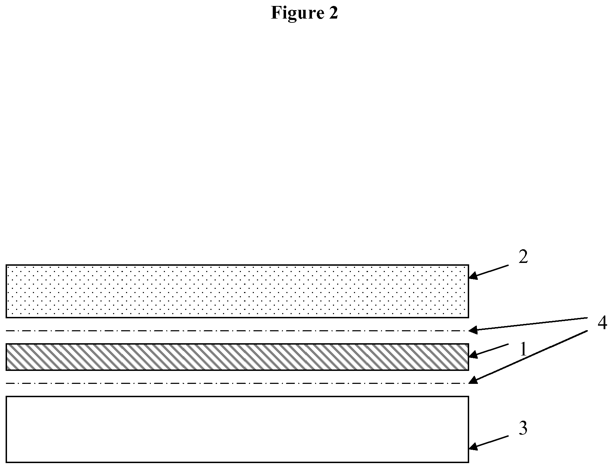

Le procédé de rénovation selon un mode de réalisation de l'invention permet d'obtenir un substrat et un revêtement souple tous deux dépourvus de résidus de colle (figure 2). La rupture, schématisée sur la figure 2 par les lignes 4, est adhésive.

Selon un mode de réalisation de l'invention, le procédé de rénovation comprend une étape supplémentaire de recyclage du revêtement souple.

Après dépose du revêtement souple, le substrat peut immédiatement être recouvert d'un nouveau revêtement et le revêtement peut être recyclé.

Un autre objet de la présente invention concerne l'utilisation de la composition de colle selon l'invention pour maintenir un revêtement de surface souple ayant une variabilité dimensionnelle maximale mesurée selon le test de Freudenberg supérieure ou égale à 0,2%.

La composition de colle selon l'invention permet effectivement de maintenir les revêtements de surface souple ayant une forte variabilité dimensionnelle. Comme indiqué dans la partie expérimentale, le revêtement collé sur un substrat à l'aide de la composition de colle selon l'invention donne une variation globale (telle que définie dans la partie expérimentale et calculée dans le tableau 2) inférieure ou égale à 0,10%.

EXEMPLES

Différentes compositions de colle ont été préparées et les performances de ces compositions ont été testées.

Les compositions A, B et C sont selon le document EP2610317 et ne font pas partie de l'invention.

Les compositions 1 et 2 sont des compositions de colle pelable selon la présente invention.

Les copolymères suivants ont été utilisés :

- VINNAPAS® EAF 68 : Dispersion aqueuse de résine acrylique à base d'acétate de vinyle, d'éthylène et d'acrylate avec Tg = -35°C,
- LUPHEN® D DS 3548 (disponible auprès de BASF) : dispersion d'une résine à base d'ester et d'uréthane ayant une température de transition vitreuse de -46°C.

Le latex naturel utilisé dans les exemples est un latex naturel Ulacol® - 3 disponible auprès de Thai Regitex Co, LTD, comprenant 60% d'extrait sec.

La densité apparente des charges a été mesurée selon le mode opératoire suivant :

- on place un godet d'une contenance d'environ V =500 mL calibré (masse du godet Mo = 500 g) en position droite au dessous d'un entonnoir en acier inoxydable d'une contenance d'environ 600 mL ;
- on ferme le fond creux de l'entonnoir avec une glissière, la glissière permettant d'assurer l'ouverture et la fermeture du fond creux de l'entonnoir) ;
- on remplit complètement l'entonnoir avec la ou les charges, homogénéisées, et on enlève rapidement la glissière, laissant ainsi s'écouler la ou les charges dans le godet ;
- on arase lentement les charges superflues à l'aide d'une règle plate (un instrument équivalent peut convenir), et on nettoie soigneusement l'extérieur du godet avec un chiffon sec (un pinceau pouvant être utilisé),
- on pose le godet sur une balance analytique au 0.1 g et on pèse le godet et son contenu, masse M1, avec une précision au 0.1 g.

La densité apparente est alors calculée comme étant : $d = (M1 - Mo)/V$. Dans cette formule, M1 et Mo s'expriment en gramme, le volume s'exprime en $cm^3$.

Les compositions illustrées dans la partie expérimentale sont décrites dans le tableau 1 ci-dessous.

Tableau 1 : Compositions

| Composition (% en poids) | A | B | C | 1 | 2 |
|---|---|---|---|---|---|
| VINNAPAS® EAF 68 (%poids sec) | 9,00 | 9,00 | 9,00 | 9,00 | 4,20 |
| LUPHEN® D DS 3548 (%poids sec) | 3,60 | 3,60 | 3,60 | 3,60 | 1,80 |
| Latex naturel (%poids sec) | 6,00 | 18,00 | 28,00 | 30,00 | 45,00 |
| eau | 56,20 | 45,50 | 34,20 | 32,20 | 34,00 |
| Charge CaCO$_3$ 350 $\mu$m | 22,05 | 20,85 | 22,05 | 22,05 | 11,80 |
| densité apparente des charges | 1,7 | 1,7 | 1,7 | 1,7 | 1,7 |

(suite)

| Composition (% en poids) | A | B | C | 1 | 2 |
|---|---|---|---|---|---|
| épaississant : solution aqueuse de polyacrylate de sodium | 0,80 | 0,80 | 0,80 | 0,80 | 0,80 |
| Biocide BT® 20 | 0,11 | 0,11 | 0,11 | 0,11 | 0,11 |
| Ajusteur de pH - soude 30% | 0,17 | 0,17 | 0,17 | 0,17 | 0,17 |
| Stabilisant N 20% (polyglycoléther d'alcool gras) | 1,30 | 1,30 | 1,30 | 1,30 | 1,30 |
| Dispersant de charge Ecodis® P 90 (polyacrylate d'ammonium) | 0,15 | - | 0,15 | 0,15 | 0,15 |
| Anti-UV Aquanox® LSF | 0,35 | 0,35 | 0,35 | 0,35 | 0,35 |
| Anti-mousse Foamaster® NXZ | 0,20 | 0,20 | 0,20 | 0,20 | 0,20 |

Variabilité dimensionnelle du revêtement collé

La variabilité dimensionnelle d'un revêtement de type caoutchouc est évaluée avec le test de Freudenberg. Le caoutchouc utilisé est un revêtement Nora de 2 mm d'épaisseur.

La figure 5a est une représentation schématique du dispositif utilisé pour le test de Freudenberg. L'élément 51 représente le thermostat, l'élément 52 représente un élément chauffant en céramique, l'élément 53 représente l'éprouvette à tester et l'élément 54 représente le support sur lequel est positionnée l'éprouvette.

La préparation des éprouvettes est effectuée en accord avec la norme EN 1903 :

- la composition de colle testée est appliquée sur un substrat de type fibrociment,
- le revêtement en caoutchouc de 25 cm x 25 cm est appliqué sur la composition de colle après un temps de gommage de 15 minutes,
- des plots de référence sont collés sur le revêtement aux emplacements A, B, C et D (voir figure 5b),
- la distance entre les plots AB, CD, AC et BD est mesurée,
- l'éprouvette est alors placée 24 heures à température ambiante (23°C), puis est placée sous irradiation infra-rouge (la température est alors de 50°C à la surface du revêtement) pendant 4 heures,
- la distance entre les plots AB, CD, AC et BD est ensuite immédiatement mesurée (variation X),
- l'éprouvette est ensuite placée 24 heures à température ambiante (23°C),
- la distance entre les plots AB, CD, AC et BD est ensuite mesurée (variation Y).

La mesure des distances AB et CD évalue la variation transversale et la mesure des distances AC et BD évalue la variation longitudinale. La figure 5b montre les positions des emplacements A, B, C et D sur l'éprouvette à tester. La flèche représente la direction longitudinale du revêtement en caoutchouc.

La variation du revêtement seul, c'est-à-dire revêtement non collé sur le substrat, est de : AB/CD/AC/BD = 0,54%/0,54%/0,26%/0,24%.

La variabilité dimensionnelle maximale du revêtement est la variation maximale mesurée dans une des directions selon le test de Freudenberg. Pour le revêtement en caoutchouc testé, la variabilité dimensionnelle maximale est de 0,54%.

A titre indicatif, une variation dimensionnelle de 0,1% sur une direction signifie que pour un lé de 1 mètre, on aura une variation de 1 mm du revêtement et donc, cela sera visible au niveau des jointures du revêtement.

Les résultats du test de Freudenberg sont indiqués dans le tableau 2 ci-dessous.

Pour faciliter la comparaison entre les différentes compositions de colle, la variation globale du revêtement aussi indiquée dans le tableau 2 est calculée de la façon suivante :

Valeur absolue (variation X maximale) + valeur absolue (variation Y maximale)

Tableau 2 : Variation dimensionnelle en % mesurée par le test de Freudenberg

| | Variation X (24h à 23°C et 4h à 50°C) | | | | Variation Y (24h à 23°C, 4h à 50°C et 24h à 23°C) | | | | Variation globale du revêtement |
|---|---|---|---|---|---|---|---|---|---|
| | AB | CD | AC | BD | AB | CD | AC | BD | |
| A | 0,14 | 0,12 | 0,14 | 0,13 | -0,10 | -0,10 | -0,11 | -0,09 | 0,24% |
| B | 0,12 | 0,12 | 0,11 | 0,10 | -0,08 | -0,07 | -0,07 | -0,08 | 0,20% |
| C | 0,10 | 0,10 | 0,10 | 0,09 | -0,04 | -0,05 | -0,04 | -0,05 | 0,15% |
| 1 | 0,06 | 0,06 | 0,05 | 0,06 | -0,04 | -0,03 | -0,03 | -0,03 | 0,10% |
| 2 | 0,01 | 0,02 | 0,01 | 0,02 | -0,02 | -0,02 | -0,03 | -0,02 | 0,03% |

Au vu du tableau 2, on s'aperçoit que la variation dimensionnelle globale du revêtement collé avec une composition de colle selon l'invention (exemples 1 et 2) est respectivement de 0,10% et 0,03% alors que la variation dimensionnelle globale du revêtement collé avec une composition de colle telle que décrite dans le document EP2610317 varie de 0,15% à 0,24%.

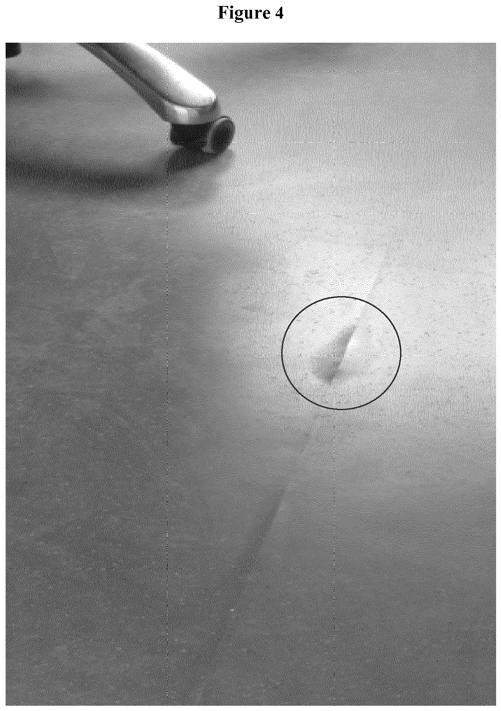

Si la variation globale est supérieure à 0,10%, cela signifie que la composition de colle ne maintient pas suffisamment le revêtement en caoutchouc et que des phénomènes de tuilage ou d'ouverture au niveau des joints du revêtement sont possibles. La figure 4 montre ce phénomène de poussée et cloquage au niveau des joints d'un revêtement (voir le cercle dessiné sur la figure 4).

Par ailleurs, les efficacités de collage et de détachement décrites dans le document EP2610317 sont conservées voire améliorées grâce aux compositions selon la présente invention.

## Revendications

1. Composition de colle comprenant :

   a) de 30% à 45% en poids de matière sèche par rapport au poids total de la composition de colle, d'au moins un latex naturel ou synthétique, ledit latex synthétique étant obtenu par polymérisation de l'isoprène,
   b) de 5% à 40% en poids de matière sèche par rapport au poids total de la composition de colle, d'au moins une composition polymérique ayant une température de transition vitreuse allant de -50°C à 0°C, ladite composition polymérique comprenant :

      i) au moins un copolymère ou un mélange d'au moins deux polymères comprenant au moins un monomère (méth)acrylate ou (méth)acrylique, , et/ou
      ii) au moins un mélange d'au moins deux polymères comprenant au moins un polyester et au moins un polyuréthane, et/ou
      iii) au moins un copolymère d'acétate de vinyle et d'éthylène.

   c) de 5 % à 40% en poids par rapport au poids total de la composition de colle d'au moins une charge.

2. Composition de colle selon la revendication 1, dans laquelle

   a) le latex représente de 30% à 40%, de préférence de 31% à 38% en poids de matière sèche par rapport au poids total de la composition de colle, et/ou
   b) la composition polymérique représente de 6% à 25%, de préférence de 10% à 20% en poids de matière sèche par rapport au poids total de la composition de colle, et/ou
   c) la ou les charges représentent de 15% à 35%, de préférence de 20% à 30% en poids du poids total de la composition.

3. Composition de colle selon l'une des revendications 1 à 2, dans laquelle la charge et/ou le mélange de charges présente une densité apparente allant de 0,60 à 1,80, de préférence de 1,30 à 1,70.

4. Composition de colle selon l'une des revendications 1 à 3, dans laquelle la charge est une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice.

5. Composition de colle selon l'une des revendications précédentes, dans laquelle la composition polymérique présente une température de transition vitreuse allant de -40°C à -10°C, de préférence allant de -37°C à -15°C.

6. Composition de colle selon l'une des revendications précédentes, dans laquelle la composition polymérique est un terpolymère d'acétate de vinyle, d'éthylène et d'acrylate.

7. Composition de colle selon l'une des revendications 1 à 5, dans laquelle la composition polymérique comprend un terpolymère d'acétate de vinyle, d'éthylène et d'acrylate et un mélange de polyester et de polyuréthane.

8. Composition de colle selon l'une des revendications précédentes, comprenant en outre des fibres, de préférence des fibres de cellulose, des fibres de verre, des fibres de caoutchouc, des fibres naturelles, telles que coton, viscose, jute, sisal, ou des fibres synthétiques, telles que polyamide, polyester, polyacrylonitrile, polypropylène, polyéthylène.

9. Procédé d'application d'un revêtement de surface souple sur un substrat comprenant les étapes suivantes :

   a) application d'une couche de composition de colle selon l'une des revendications 1 à 8 sur le substrat,
   b) affichage du revêtement souple sur le substrat.

10. Procédé d'application selon la revendication 9, dans lequel le revêtement souple est un revêtement ayant une variabilité dimensionnelle maximale mesurée selon le test de Freudenberg supérieure ou égale à 0,2%.

11. Procédé d'application selon la revendication 9 ou la revendication 10, dans lequel la quantité de composition de colle appliquée est supérieure ou égale à 200 g/m$^2$, de préférence supérieure ou égale à 250 g/m$^2$, de préférence encore supérieure ou égale à 300 g/m$^2$, plus particulièrement supérieure ou égale à 350 g/m$^2$.

12. Procédé d'application selon l'une des revendications 9 à 11, comprenant avant l'étape a), une étape d'application d'une trame ou d'une bande d'armature tissée ou non-tissée sur le substrat.

13. Procédé de rénovation d'un substrat revêtu d'une membrane obtenue par séchage de la composition de colle selon l'une des revendications 1 à 8, et d'un revêtement de surface souple, ledit procédé de rénovation comprenant une étape de dépose du revêtement de surface souple.

14. Procédé de rénovation selon la revendication 13, dans lequel le revêtement de surface souple est un revêtement de surface souple ayant une variabilité dimensionnelle maximale mesurée selon le test de Freudenberg supérieure ou égale à 0,2%.

15. Utilisation de la composition de colle selon l'une des revendications 1 à 8, pour maintenir un revêtement de surface souple ayant une variabilité dimensionnelle maximale mesurée selon le test de Freudenberg supérieure ou égale à 0,2%.

**Patentansprüche**

1. Klebstoffzusammensetzung, umfassend:

   a) 30 bis 45 Gew.-% Trockensubstanz, bezogen auf das Gesamtgewicht der Klebstoffzusammensetzung, mindestens eines natürlichen oder synthetischen Latex, wobei der natürliche Latex durch Polymerisation von Isopren erhalten wird,
   b) 5 bis 40 Gew.-% Trockensubstanz, bezogen auf das Gesamtgewicht der Klebstoffzusammensetzung, mindestens einer Polymerzusammensetzung mit einer Glasübergangstemperatur im Bereich von -50°C bis 0°C, wobei die Polymerzusammensetzung

      i) mindestens ein Copolymer oder ein Gemisch von mindestens zwei Polymeren, umfassend mindestens ein (Meth)acrylat- oder (Meth)acrylmonomer, und/oder
      ii) mindestens eine Mischung von mindestens zwei Polymeren, umfassend mindestens einen Polyester und mindestens ein Polyurethan, und/oder

iii) mindestens ein Copolymer von Vinylacetat und Ethylen

umfasst,
c) 5 bis 40 Gew.-%, bezogen auf das Gesamtgewicht der Klebstoffzusammensetzung, mindestens eines Füllstoffs.

2. Klebstoffzusammensetzung nach Anspruch 1, wobei

a) der Latex 30 bis 40 Gew.-% und vorzugsweise 31 bis 38 Gew.-% Trockensubstanz, bezogen auf das Gesamtgewicht der Klebstoffzusammensetzung, ausmacht und/oder
b) die Polymerzusammensetzung 6 bis 25 Gew.-% und vorzugsweise 10 bis 20 Gew.-% Trockensubstanz, bezogen auf das Gesamtgewicht der Klebstoffzusammensetzung, ausmacht und/oder
c) der bzw. die Füllstoffe 15 bis 35 Gew.-% und vorzugsweise 20 bis 30 Gew.-% des Gesamtgewichts der Zusammensetzung ausmachen.

3. Klebstoffzusammensetzung nach einem der Ansprüche 1 bis 2, wobei der Füllstoff und/oder die Mischung von Füllstoffen eine scheinbare Dichte im Bereich von 0,60 bis 1,80, vorzugsweise von 1,30 bis 1,70, aufweist.

4. Klebstoffzusammensetzung nach einem der Ansprüche 1 bis 3, wobei es sich bei dem Füllstoff um einen mineralischen Füllstoff handelt, der vorzugsweise aus Calciumcarbonat, Magnesiumcarbonat, Sand, Aluminiumoxid, Aluminiumoxidhydrat, Magnesiumsilikat, Aluminiumsilikat, Natriumsilikat, Kaliumsilikat, Glimmer und Siliciumdioxid ausgewählt ist.

5. Klebstoffzusammensetzung nach einem der vorhergehenden Ansprüche, wobei die Polymerzusammensetzung eine Glasübergangstemperatur im Bereich von -40°C bis -10°C und vorzugsweise im Bereich von -37°C bis -15°C aufweist.

6. Klebstoffzusammensetzung nach einem der vorhergehenden Ansprüche, wobei es sich bei der Polymerzusammensetzung um ein Terpolymer von Vinylacetat, Ethylen und Acrylat handelt.

7. Klebstoffzusammensetzung nach einem der Ansprüche 1 bis 5, wobei die Polymerzusammensetzung ein Terpolymer von Vinylacetat, Ethylen und Acrylat und eine Mischung von Polyester und Polyurethan umfasst.

8. Klebstoffzusammensetzung nach einem der vorhergehenden Ansprüche, ferner umfassend Fasern, vorzugsweise Cellulosefasern, Glasfasern, Kautschukfasern, Naturfasern, wie Baumwolle, Viskose, Jute, Sisal, oder Kunstfasern, wie Polyamid, Polyester, Polyacrylnitril, Polypropylen, Polyethylen.

9. Verfahren zum Aufbringen einer flexiblen Oberflächenbeschichtung auf ein Substrat, das folgende Schritte umfasst:

a) Aufbringen einer Schicht der Klebstoffzusammensetzung nach einem der Ansprüche 1 bis 8 auf das Substrat,
b) Anbringen der flexiblen Beschichtung auf dem Substrat.

10. Verfahren zum Aufbringen nach Anspruch 9, wobei es sich bei der flexiblen Beschichtung um eine Beschichtung mit einer gemäß dem Freudenberg-Test gemessenen Maßvariabilität größer gleich 0,2% handelt.

11. Verfahren zum Aufbringen nach Anspruch 9 oder Anspruch 10, bei dem die aufgebrachte Menge an Klebstoffzusammensetzung größer gleich 200 g/m$^2$, vorzugsweise größer gleich 250 g/m$^2$, noch weiter bevorzugt größer gleich 300 g/m$^2$ und weiter bevorzugt größer gleich 350 g/m$^2$ ist.

12. Verfahren zum Aufbringen nach einem der Ansprüche 9 bis 11, umfassend vor Schritt a) einen Schritt des Aufbringens eines Schusses oder eines Webstoff- oder Vliesstoff-Verstärkungsstreifens auf das Substrat.

13. Verfahren zur Renovierung eines mit einer durch Trocknen der Klebstoffzusammensetzung nach einem der Ansprüche 1 bis 8 erhaltenen Membran und einer flexiblen Oberflächenbeschichtung beschichteten Substrats, wobei das Verfahren zur Renovierung einen Schritt des Abscheidens der flexiblen Oberflächenbeschichtung umfasst.

14. Verfahren zur Renovierung nach Anspruch 13, wobei es sich bei der flexiblen Oberflächenbeschichtung um eine flexible Oberflächenbeschichtung mit einer gemäß dem Freudenberg-Test gemessenen Maßvariabilität größer gleich 0,2% handelt.

**15.** Verwendung der Klebstoffzusammensetzung nach einem der Ansprüche 1 bis 8 zur Aufrechterhaltung einer flexiblen Oberflächenbeschichtung mit einer gemäß dem Freudenberg-Test gemessenen Maßvariabilität größer gleich 0,2%.

**Claims**

**1.** Adhesive composition comprising:

a) from 30% to 45% by weight of dry material based on the total weight of the adhesive composition, of at least one natural or synthetic latex, said synthetic latex being obtained by polymerization of isoprene,
b) from 5% to 40% by weight of dry material based on the total weight of the adhesive composition, of at least one polymeric composition having a glass transition temperature ranging from -50°C to 0°C, said polymeric composition comprising:

i) at least one copolymer or one mixture of at least two polymers comprising at least one (meth)acrylate or (meth)acrylic monomer, and/or
ii) at least one mixture of at least two polymers comprising at least one polyester and at least one polyurethane, and/or
iii) at least one copolymer of vinyl acetate and of ethylene,

c) from 5% to 40% by weight based on the total weight of the adhesive composition, of at least one filler.

**2.** Adhesive composition according to Claim 1, wherein

a) the latex represents from 30% to 40%, preferably from 31% to 38% by weight of dry material based on the total weight of the adhesive composition, and/or
b) the polymeric composition represents from 6% to 25%, preferably from 10% to 20% by weight of dry material based on the total weight of the adhesive composition, and/or
c) the filler(s) represent(s) from 15% to 35%, preferably from 20% to 30% by weight of the total weight of the composition.

**3.** Adhesive composition according to either of Claims 1 and 2, wherein the filler and/or the mixture of fillers has an apparent density ranging from 0.60 to 1.80, preferably from 1.30 to 1.70.

**4.** Adhesive composition according to one of Claims 1 to 3, wherein the filler is a mineral filler, preferably selected from calcium carbonate, magnesium carbonate, sand, alumina, hydrated alumina, magnesium silicate, aluminium silicate, sodium silicate, potassium silicate, mica and silica.

**5.** Adhesive composition according to one of the preceding claims, wherein the polymeric composition has a glass transition temperature ranging from -40°C to -10°C, preferably ranging from -37°C to -15°C.

**6.** Adhesive composition according to one of the preceding claims, wherein the polymeric composition is a terpolymer of vinyl acetate, of ethylene and of acrylate.

**7.** Adhesive composition according to one of Claims 1 to 5, wherein the polymeric composition comprises a terpolymer of vinyl acetate, of ethylene and of acrylate and a mixture of polyester and polyurethane.

**8.** Adhesive composition according to one of the preceding claims, further comprising fibers, preferably cellulose fibers, glass fibers, rubber fibers, natural fibers such as cotton, viscose, jute, sisal or synthetic fibers such as polyamide, polyester, polyacrylonitrile, polypropylene, polyethylene fibers.

**9.** Method for applying a flexible surface coating on a substrate comprising the following steps:

a) applying a layer of adhesive composition according to one of Claims 1 to 8 on the substrate,
b) sticking the flexible coating on the substrate.

10. Application method according to Claim 9, wherein the flexible coating is a coating having a maximum dimensional variability, measured according to the Freudenberg test, of greater than or equal to 0.2%.

11. Application method according to Claim 9 or Claim 10, wherein the amount of applied adhesive composition is greater than or equal to 200 g/m$^2$, preferably greater than or equal to 250 g/m$^2$, still preferably greater than or equal to 300 g/m$^2$, more particularly greater than or equal to 350 g/m$^2$.

12. Application method according to one of Claims 9 to 11, comprising before step a), a step for applying a weft or a woven or non-woven reinforcing strip on the substrate.

13. Method for renovation of a substrate coated with a membrane, obtained by drying of the adhesive composition according to one of Claims 1 to 8, and with a flexible surface coating, said renovation method comprising a step for pulling off the flexible surface coating.

14. Renovation method according to Claim 13, wherein the flexible surface coating is a flexible surface coating having a maximum dimensional variability, measured according to the Freudenberg test, of greater than or equal to 0.2%.

15. Use of the adhesive composition according to one of Claims 1 to 8 in order to maintain a flexible surface coating having a maximum dimensional variability, measured according to the Freudenberg test, of greater than or equal to 0.2%.

**Figure 1**

Figure 2

## Figure 3

Figure 3a

Figure 3b

Figure 3c

Figure 3d

Figure 3e

Figure 4

# Figure 5

**Figure 5a**

**Figure 5b**

**EP 2 952 547 B1**

**Documents brevets cités dans la description**

- EP 2610317 A